# EUROPEAN PATENT APPLICATION

(11) **EP 4 778 770 A1**
(43) Date of publication of application: **22.07.2026**
(21) Application number: 25218271.2
(22) Date of filing: 25.11.2025
(51) Int. Cl.: B60L 3/00, B60L 50/71, B60L 50/72, H01M 8/04111

(54) **FUEL CELL VEHICLE**

(30) Priority: 17.01.2025 JP 2025006843
(71) Applicant: Toyota Jidosha Kabushiki Kaisha, Toyota-shi, Aichi-ken 471-8571 (JP)
(72) Inventor: KIMURA, Tatsuya, Toyota-shi, 471-8571 (JP)
(74) Representative: TBK

(57) **Abstract**

A fuel cell vehicle supplies oxygen-containing gas from an air compressor to a fuel cell accommodated in a front room of a vehicle via a gas supply piping. In this fuel cell vehicle, a protector is fastened to the air compressor in order to suppress or avoid a damage at the time of side collision or the like of the air compressor arranged inside the front room. An end portion of the protector in a vehicle width direction is arranged at a position facing a side frame provided further in an outside in a vehicle width direction of the vehicle than the air compressor. A part of the gas supply piping is arranged in between the side frame and the end portion of the protector and absorbs an impact generated at the time of collision or the like.

## Description

### CROSS REFERENCE TO RELATED APPLICATION

The present application claims priority from Japanese application P2025-6843 filed on January 17, 2025, the content of which is hereby incorporated by reference into this application.

### BACKGROUND

### FIELD

The present disclosure relates to a fuel cell vehicle.

### RELATED ART

In a fuel cell vehicle, in addition to a fuel cell stack, an air compressor that sends air as oxygen-containing gas to a fuel cell is arranged inside a front room. At the time of vehicle collision, an impact is applied to a device inside the front room. Therefore, conventionally, an arrangement that enhances impact resistance of the air compressor has been desired. For example, in a fuel cell vehicle disclosed in Japanese Patent Application Laid-Open Publication No. 2018-158595, an auxiliary machine such as a refrigerant supply pump is arranged further forward of a traveling direction than the air compressor to relax the impact applied to the air compressor at the time of vehicle collision by the refrigerant supply pump.

Patent Literature 1 discloses an excellent invention for relaxing an impact applied to the air compressor by the arrangement of the auxiliary machine and the air compressor. However, a structure is desired in which a degree of freedom of the arrangement of the air compressor and the auxiliary machine is improved, the structure being configured to relax an impact at the time of collision that is applied to the air compressor even when there is no sufficient space for arranging the auxiliary machine such as the refrigerant supply pump in between the air compressor and the vehicle frame, for example.

### SUMMARY

The present disclosure may be achieved as the aspect and application examples described below.
(1) An aspect of the present disclosure is a device as a fuel cell vehicle. This fuel cell vehicle includes: a fuel cell accommodated in a front room of the vehicle; an air compressor that supplies oxygen-containing gas to the fuel cell via a gas supply piping; a side frame provided in an outside in a vehicle width direction of the vehicle than the air compressor; and a protector fastened to the air compressor, the protector having an end portion in the vehicle width direction arranged at a position facing the side frame. Here, a part of the gas supply piping is arranged in between the side frame and an end portion of the protector. As a result, even when the vehicle receives an impact due to side collision or the like and the air compressor inside the front room moves to the side frame side, the end portion of the protector crushes the gas supply piping and collides with the side frame, so that a damage of the air compressor may be suppressed.
(2) In the configuration (1) described above, the protector may include, in the end portion, an attachment plate having a dimension larger than a thickness of the protector in a direction of the thickness. As a result, the attachment plate provided in the end portion of the protector reliably contacts with the gas supply piping, so that impact absorption by the gas supply piping may be reliably achieved.
(3) In the configuration (1) or (2) described above, an inverter that supplies electric power to the air compressor may be further provided, and at least a part of an inverter case storing the inverter may be arranged in a side of the side frame of the air compressor and further in an inside than the attachment plate. As a result, even when receiving an impact of side collision or the like, an impact to the inverter case storing the inverter may be reduced, and a damage of the inverter case as well as an inverter component in the inside may be suppressed.
(4) In each configuration described above, fastening of the protector and the air compressor may be performed by a plurality of bosses. Since an impact to the plurality of bosses is reduced, breakage or the like of the bosses may be suppressed or avoided.
(5) In the configurations (1) to (4) described above, a portion of the gas supply piping arranged in between the side frame and the end portion of the protector may be a piping made of a resin. As a result, since strength of the gas supply piping may be made to be lower than strength of the side frame and the attachment plate of the protector, when the air compressor moves to the side frame side due to an impact of side collision or the like, the gas supply piping is crushed, so that the impact may be reliably relaxed.

### BRIEF DESCRIPTION OF THE DRAWINGS

FIG. 1 is an explanatory diagram showing a schematic configuration of a fuel cell vehicle of an embodiment in a cross-sectional view;
FIG. 2 is a block diagram showing a schematic configuration of the fuel cell system of the embodiment;
FIG. 3 is a plan view for explaining a positional relationship between a side frame and an air compressor in the fuel cell vehicle of the embodiment;
FIG. 4 is a IV-IV arrow view in FIG. 3;
FIG. 5 is an explanatory diagram schematically showing arrangement of the side frame, a protector, and the air compressor in arrow view in an X direction;
FIG. 6 is an explanatory diagram for explaining a situation of deformation when an impact is applied to the side frame;
FIG. 7 is an explanatory diagram for explaining an influence on bosses when an impact is applied to the side frame; and
FIG. 8 is an explanatory diagram showing an example of deformation of each component at the time of collision.

### DETAILED DESCRIPTION

### A. Embodiment:

### (A1) Overall Configuration:

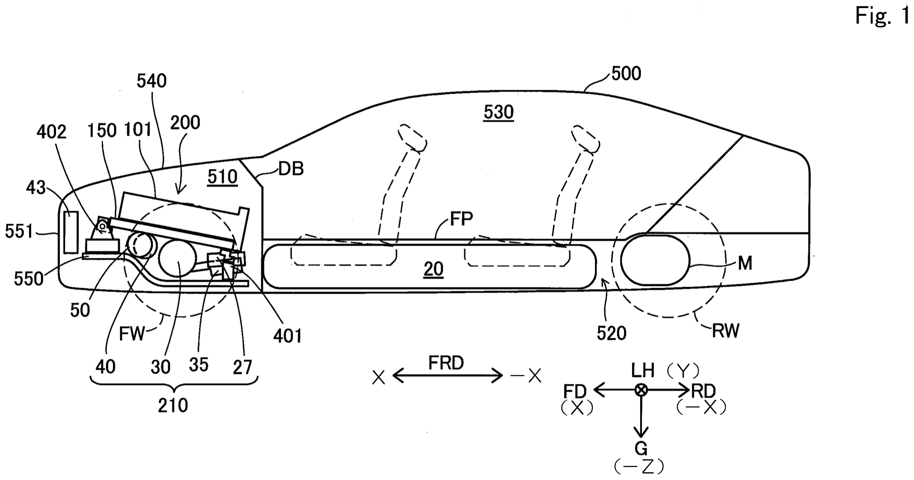

FIG. 1 is an explanatory diagram showing a schematic configuration of a fuel cell vehicle 500 as an embodiment of the present disclosure in a cross-sectional view. The fuel cell vehicle 500 mounts a fuel cell 101 as a power source. When a motor M being a power source is powered by electricity from the fuel cell, rear wheels RW are driven. FIG. 1 shows a cross section along an X direction extending to a vehicle forward side FD and a -X direction extending to a vehicle rearward side RD at a predetermined position in a vehicle width direction LH of the fuel cell vehicle 500. In the present embodiment, the direction along the X direction and the -X direction may be referred to as a "front and rear direction FRD". In FIG. 1, a Y direction being the vehicle width direction of the fuel cell vehicle 500 may be referred to as the vehicle width direction LH, and in a Z direction orthogonal to the X direction and the Y direction, a gravity direction, that is, a vertically downward direction may be referred to as a gravity direction G. The reference numerals and arrows indicating the X, Y, and Z directions shown in FIG. 1 are also shown in the other drawings.

The fuel cell vehicle 500 includes a front room 510, a tank accommodation chamber 520, and a cabin 530. The front room 510 is partitioned from the tank accommodation chamber 520 and the cabin 530 by a dash board DB. The tank accommodation chamber 520 and the cabin 530 are partitioned from each other by a front panel FP. The cabin 530 is a room in which an occupant enters. As shown in FIG. 1 by a broken line, the cabin 530 is provided with a plurality of seats. The cabin 530 is located almost in a region sandwiched by a pair of front wheels FW and a pair of rear wheels RW. The front room 510 is located further forward FD than the cabin 530. The tank accommodation chamber 520 is located further rearward RD than the front room 510 and located further downward than the cabin 530.

In the front room 510, a suspension member 550 and at least some components of a fuel cell system 200 including the fuel cell 101 are arranged. The suspension member 550 is a columnar member having a front and rear direction FRD as a longitudinal direction, and is arranged further downward than the fuel cell 101. Although not shown in the drawing, suspension members 550 having almost the same shape are arranged so as to be separated from each other by a predetermined width in the vehicle width direction LH. That is, the pair of suspension members 550 arranged so as to be separated from each other by a predetermined interval in the vehicle width direction LH are arranged inside the front room 510. An end portion of the suspension member 550 in the rear direction is fixed to a side member (not shown). The side member is a member forming a part of a vehicle frame, that is, a framework of the vehicle, and is a columnar member having the front and rear direction FRD as a longitudinal direction. On the other hand, an end portion of the suspension member 550 in the forward direction is opened.

The fuel cell 101 and a support frame 150 are arranged inside the front room 510. The fuel cell 101 is a stack including a plurality of stacked unit cells. In the present embodiment, the fuel cell 101 is a polymer electrolyte fuel cell. The support frame 150 is a tabular member supporting the fuel cell 101 from a downward side. The fuel cell 101 is arranged so as to be inclined to be located further downward toward a side (rearward RD side) heading to the tank 20 in the front and rear direction FRD. Since the fuel cell 101 is arranged so as to be inclined, water inside the fuel cell 101 is easily collected to the rearward RD side by utilizing the gravity and discharged from the fuel cell 101.

A rear side portion of the support frame 150 is attached to the suspension member 550 by a rear side attachment part 401. A front side portion of the support frame 150 is attached to the suspension member 550 by a front side attachment part 402.

The fuel cell system 200 further includes an auxiliary machine 210 that operates at the time of electric power generation of the fuel cell 101. The auxiliary machine 210 is arranged further downward than the fuel cell 101 and the support frame 150 in the front room 510. The auxiliary machine 210 includes an anode off-gas circulation pump 27, an air compressor 30, a refrigerant supply pump 40, and an intercooler 35. Each of the anode off-gas circulation pump 27, the air compressor 30, the refrigerant supply pump 40 is independently fixed. The anode off-gas circulation pump 27 causes anode off-gas to circulate through the fuel cell vehicle 500. The anode off-gas is unreacted anode gas discharged from the fuel cell 101. The air compressor 30 supplies air as cathode gas to the fuel cell 101. The refrigerant supply pump 40 supplies cooling water as a refrigerant to the fuel cell 101. The intercooler 35 cools the cathode gas with increased temperature sent from the air compressor 30 to the fuel cell 101.

The fuel cell vehicle 500 includes an air conditioning air compressor 50 as an auxiliary machine of the fuel cell vehicle 500. The air conditioning air compressor 50 supplies an air conditioning refrigerant to be used in an air conditioning device mounted in the fuel cell vehicle 500 to a heat exchanger (not shown). The air conditioning air compressor 50 is arranged further downward than the fuel cell 101 and the support frame 150 in the front room 510.

In the further forward FD side than the auxiliary machine 210 and the air conditioning air compressor 50, various types of components constituting the fuel cell 500 are arranged. The various components include a part of a hood 540, a radiator 43, a component 551 (for example, a front grill) forming a front surface of the fuel cell vehicle 500, and the like.

The tank accommodation chamber 520 accommodates the tank 20. The tank 20 is filled with hydrogen gas as anode gas. The tank accommodation chamber 520 is located further rearward RD than the front room 510 under the floor of the fuel cell vehicle 500. The tank accommodation chamber 520 is formed along the front and rear direction FRD in the substantially center of the vehicle width direction LH. A ceiling portion of the tank accommodation chamber 520 is formed by a floor panel FP of the cabin 530. A portion corresponding to the tank accommodation chamber 520 in the floor of the cabin 530 projects further vertically upward than the other portions of the floor. As described above, the tank accommodation chamber 520 has a similar shape to a shape of a center tunnel arranged with a drive shaft in a vehicle equipped with an engine.

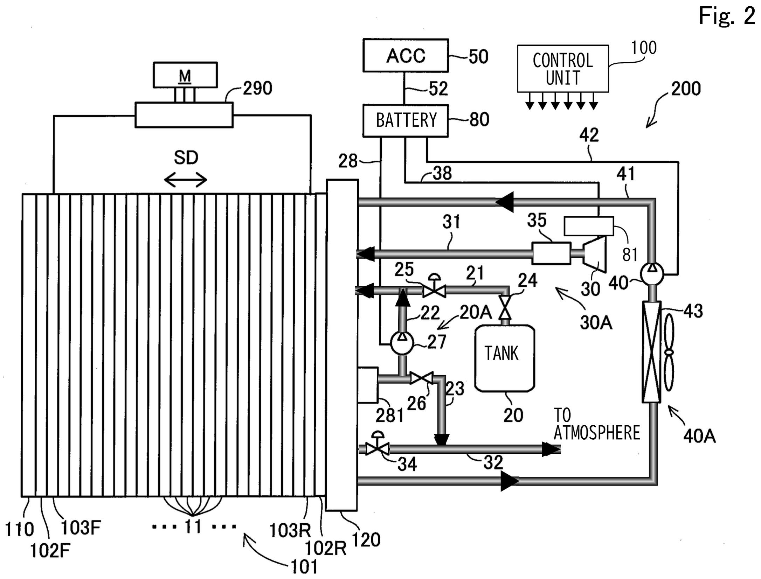

FIG. 2 is a block diagram showing a schematic configuration of the fuel cell system 200. FIG. 2 also shows components (for example, the air conditioning air compressor 50) not constituting the fuel cell system 200. The fuel cell system 200 includes an anode gas supply and discharge system 20A, a cathode gas supply and discharge system 30A, and a refrigerant circulation system 40A, in addition to the fuel cell 101 described above.

The fuel cell 101 includes a plurality of stacked unit cells 11 and includes a pair of end plates 110, 120 in both end portions in a stacking direction SD of the stacking. The end plate 110 is also referred to as a first end plate 110 and the end plate 120 is also referred to as a second end plate 120. Each unit cell 11 generates electric power by electrochemical reaction between anode gas supplied to an anode side catalyst electrode layer and cathode gas supplied to a cathode side catalyst electrode layer provided sandwiching a polymer electrolyte membrane. In the present embodiment, the anode gas is hydrogen gas and the cathode gas is oxygen-containing gas which is air herein. The fuel cell 101 is installed such that the second end plate 120 is located further rearward RD (FIG. 1) than the first end plate 110. Inside the fuel cell 101, a manifold (not shown) for allowing the anode gas, the cathode gas, and the refrigerant to flow through is formed along the stacking direction SD of the unit cells 11.

The pair of end plates 110, 120 sandwich the stack including the plurality of unit cells 11. Among the pair of end plates 110, 120, the second end plate 120 has a function of supplying the anode gas, the cathode gas, and a cooling medium to the manifold formed inside the fuel cell 101, and a function of providing a flow path for discharging the mediums. On the other hand, the first end plate 110 does not have these functions. Both the first end plate 110 and the second end plate 120 have a substantially tabular appearance in which a thickness direction matches the stacking direction SD.

A pair of current collectors 103F, 103R of the fuel cell 101 are electrically connected with a DC-DC converter 290. An insulating plate 102F is arranged in between the current collector 103F and the first end plate 110. Similarly, an insulating plate 102R is arranged in between the current collector 103R and the second end plate 120. The DC-DC converter 290 is electrically connected with the motor M, and increases an output voltage of the fuel cell 101 and the result to the motor M. The electrical power supplied to the motor M is controlled by the control unit 100.

The anode gas supply and discharge system 20A includes the above-described tank 20, an anode gas supply path 21 as a piping, a main stop valve 24, a pressure regulating valve 25, an anode gas circulation path 22 as a piping, a gas-liquid separator 281, the above-described anode off-gas circulation pump 27, an on-off valve 26, and a discharge path 23 as a piping. The anode gas supply path 21 is connected to the tank 20 and the fuel cell 101. The anode gas supply path 21 is a flow path for allowing hydrogen gas in the tank 20 to flow through the fuel cell 101. The main stop valve 24 is provided in the anode gas supply path 21 and switches execution and stop of supply of the hydrogen gas from the tank 20, according to an instruction from the control unit 100. The pressure regulating valve 25 is provided further in the downstream side than the main stop valve 24 in the anode gas supply path 21. The pressure regulating valve 25 adjusts a pressure of the anode gas supplied to the fuel cell 101 according to an instruction from the control unit 100.

The anode gas circulation path 22 is a flow path allowing the anode off-gas (also referred to as "anode exhaust gas") discharged from the fuel cell 101 to circulate again through the anode gas supply path 21. The gas-liquid separator 281 separates liquid water from the anode off-gas mixed with liquid water. Impurity gas, for example, nitrogen gas, contained in the anode off-gas is also separated together with the liquid water. The anode off-gas circulation pump 27 is arranged further in the downstream side than the gas-liquid separator 281 in the anode gas circulation path 22. The anode off-gas circulation pump 27 supplies the anode off-gas discharged from the fuel cell 101 again to the anode gas supply path 21 according to an instruction from the control unit 100. That is, the anode off-gas circulation pump 27 allows the anode off-gas to circulate through the fuel cell 101. The on-off valve 26 is provided in the discharge path 23. The discharge path 23 is connected to a cathode gas discharge path 32. The on-off valve 26 becomes in an open state at a predetermined timing according to an instruction from the control unit 100. As a result, the liquid water and nitrogen gas separated by the gas-liquid separator 281 pass the discharge path 23 and the cathode gas discharge path 32 and are discharged to the outside of the system.

The cathode gas supply and discharge system 30A includes the above-described air compressor 30, the above-described intercooler 35, a cathode gas supply path 31 as a piping, the cathode gas discharge path 32 as a piping, and a pressure regulating valve 34. The cathode gas supply path 31 is connected to the fuel cell 101. The cathode gas supply path 31 is a flow path for allowing outside air to flow through the fuel cell 101. The air compressor 30 is provided in the cathode gas supply path 31. The intercooler 35 is provided in the downstream side of the air compressor 30 in the cathode gas supply path 31. The cathode gas discharge path 32 is a flow path for discharging the cathode gas from the fuel cell 101 to the outside. The pressure regulating valve 34 is provided in the cathode gas discharge path 32 and a degree of opening of the pressure regulating valve 34 is regulated according to an instruction from the control unit 100. As a result, a back pressure in a cathode side of the fuel cell 101 is regulated.

The refrigerant circulation system 40A includes a refrigerant circulation path 41 as a piping, the above-described refrigerant supply pump 40, and a radiator 43. The refrigerant circulation path 41 is a flow path for allowing refrigerant (for example, water) for cooling the fuel cell 101 to circulate. The refrigerant supply pump 40 allows the refrigerant in the refrigerant circulation path 41 to circulate through the refrigerant circulation path 41 and the fuel cell 101 according to an instruction from the control unit 100. That is, the refrigerant supply pump 40 supplies the refrigerant to the fuel cell 101. The radiator 43 includes a fan for taking in outside air, and causes heat exchange between the refrigerant in the refrigerant circulation path 41 and the outside air to cool the refrigerant.

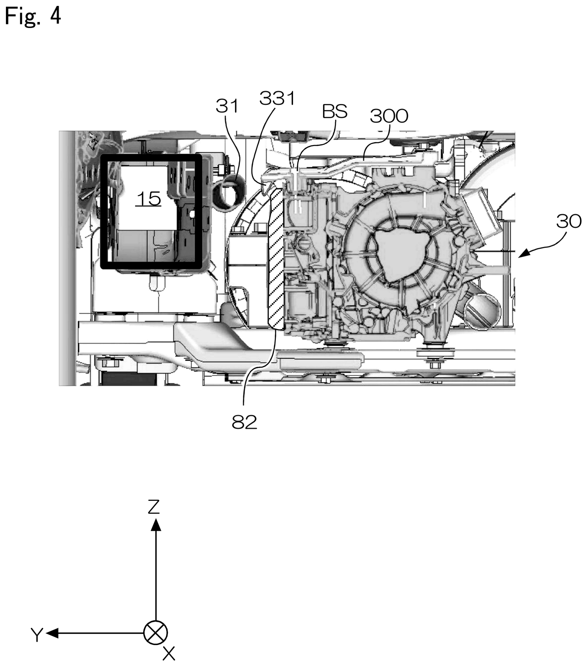

The fuel cell system 200 further includes a battery 80. The battery 80 is rechargeable by output electric power from the fuel cell 101. The battery 80 is a secondary battery and may be configured by, for example, a lithium-ion battery or a nickel-metal hydride battery that may be recharged and discharged. The battery 80 is electrically connected to, for example, the air compressor 30, the refrigerant supply pump 40, the anode off-gas circulation pump 27, and the air conditioning air compressor 50 by using cables 38, 42, 28, and 52, and supplies electric power to each of the components 30, 40, 27, and 50. Each of the cable 38, 42, 28, and 52 is connected to a terminal portion (not shown) provided in each of the air compressor 30, the refrigerant supply pump 40, the anode off-gas circulation pump 27, and the air conditioning air compressor 50. The air compressor 30 is provided with an inverter 81 for regulating an electric power amount for driving. The electric power from the battery 80 is output to the air compressor 30 via the inverter 81. As described later, the inverter 81 is stored in an inverter case 82 (see FIG. 4) connected with the air compressor 30.

The output voltage of the battery 80 is increased to an operation voltage according to electric power demanded by each of the components 30, 40, 27, and 50 by a DC-DC converter (not shown) provided correspondingly to the components 30, 40, 27, and 50. As a result, electric power according to an operation voltage of each of the air compressor 30, the refrigerant supply pump 40, the anode off-gas circulation pump 27, and the air conditioning air compressor 50 is supplied from the battery 80. Similarly to the air compressor 30, the output electric power of the battery 80 is converted into a three-phase AC power by an inverter (not shown), and then supplied to the refrigerant supply pump 40, the anode off-gas circulation pump 27, and the air conditioning air compressor 50. As a result, the air compressor 30, the refrigerant supply pump 40, the anode off-gas circulation pump 27, and the air conditioning air compressor 50 are driven.

In the present embodiment, the air compressor 30 has the largest maximum voltage applied by the demand from the fuel cell vehicle 500, among the air compressor 30, the refrigerant supply pump 40, the anode off-gas circulation pump 27, and the air conditioning air compressor 50. That is, a higher voltage may be applied to the air compressor 30 than voltages applied to the refrigerant supply pump 40, the anode off-gas circulation pump 27, and the air conditioning air compressor 50. For example, the maximum voltage applied to the air compressor 30 is equal to or greater than 200 V. In the above description, the air compressor 30, the refrigerant supply pump 40, the anode off-gas circulation pump 27, and the air conditioning air compressor 50 are driven by electric power from the battery 80. However, the components 30, 40, 27, 50, and the like may be configured to be supplied with electric power from another power source.

### (A2) Arrangement of Air Compressor and Side Frame:

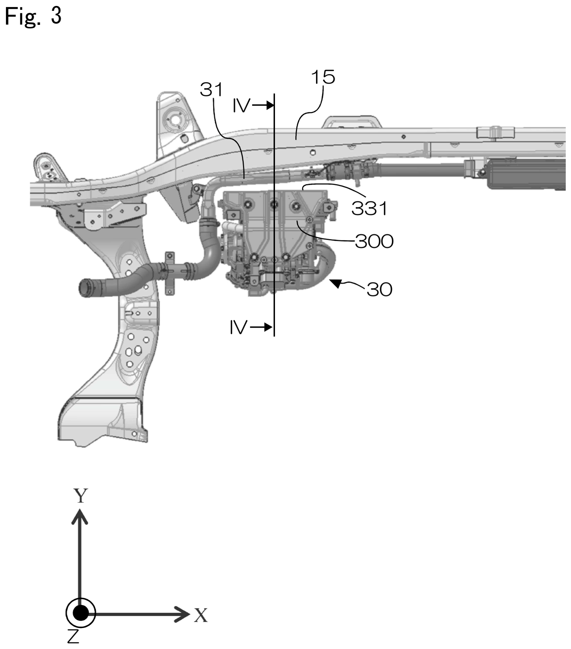

Next, a positional relationship between the air compressor 30 and the side frame 15 in the fuel cell vehicle 500 of the embodiment will be described. FIG. 3 is a plan view for explaining the positional relationship between the air compressor 30 and the side frame 15. FIG. 4 is a IV-IV arrow view in FIG. 3. As shown in these drawings, the side frame 15 is a vehicle structure provided along the direction of the front and rear direction FRD, that is, the X direction shown in the drawing, in both sides of the vehicle width direction LH of the front room 510. The air compressor 30 is provided so as to be slightly separated in the Y direction in the vicinity of the side frame 15.

The cathode gas supply path 31 is arranged in a gap formed due to separation of the air compressor 30 from the side frame 15. In this example, the cathode gas supply path 31 is made of a synthetic resin. It is preferable that the cathode gas supply path 31 is formed of a softer material such as a synthetic resin than a material of the air compressor 30 at least in a region where the side frame 15 and the air compressor 30 face each other. Such materials include elastomer such as rubber in addition to a synthetic resin. Even a metal may be used as long as the metal is thin aluminum, tin, or an alloy of them that is softer than the air compressor 30.

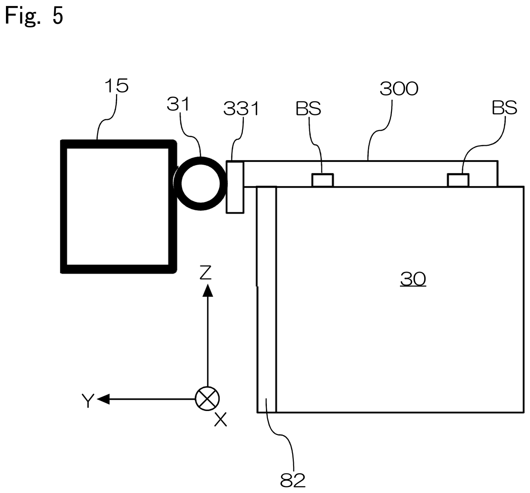

As shown in the drawing, a protector 300 is fixed to an upper part of the air compressor 30 by using a boss BS. An attachment plate 331 is provided in an end portion in the Y direction of the protector 300, that is, the side frame 15 side. A dimension of the attachment plate 331 along a thickness direction of the protector 300 is larger than a thickness of the protector 300. The inverter case 82 accommodating the inverter 81 is fixed to the air compressor 30. As shown in FIG. 4, the inverter case 82 is arranged in a lower part of the protector 300, and has an end portion arranged inside the attachment plate 331 provided so as to project downward from the protector 300 in the end portion of the protector 300. As shown in the drawing, the cathode gas supply path 31 is arranged in between the attachment plate 331 and the side frame 15, and a slight gap is secured in between the attachment plate 331 and the cathode gas supply path 31. FIG. 5 schematically shows such relationships among the side frame 15, the cathode gas supply path 31, the attachment plate 331, the protector 300, the air compressor 30, and the inverter case 82.

### (A3) Behavior at the Time of Side Collision

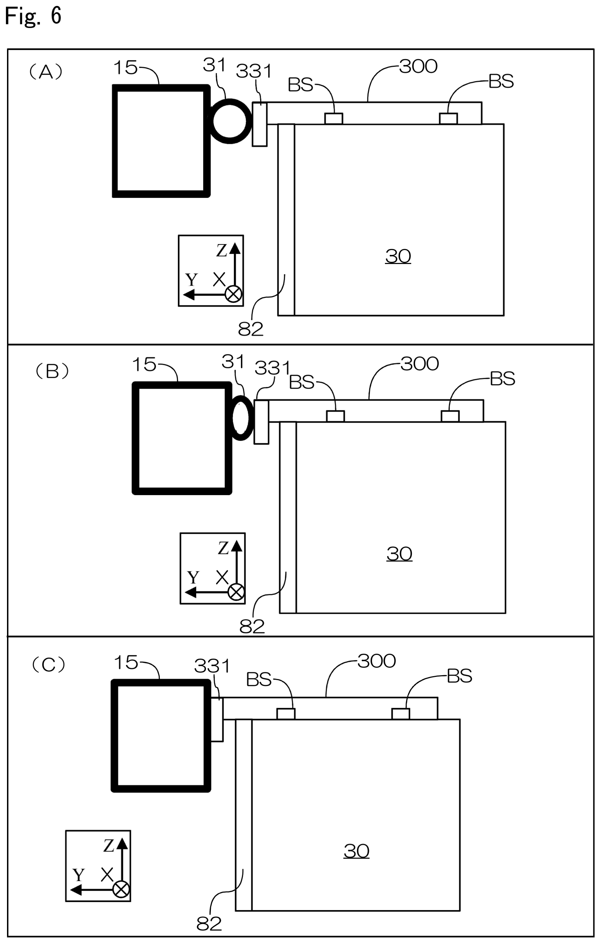

A behavior of the air compressor 30 or the like of the fuel cell vehicle 500 including the structure described above at the time of side collision will be described with reference FIGS. 5 and 6. In FIG. 6, the upper part (A) shows a positional relationship before side collision among the side frame 15, the cathode gas supply path 31, and the air compressor 30 including the protector 300. The middle part (B) shows a state where the air compressor 30 is pressed against the side frame 15 due to side collision. The lower part (C) shows a case where the cathode gas supply path 31 is not arranged in between the side frame 15 and the protector 300 attached to the air compressor 30 and the attachment plate 331 of the protector 300 directly contacts with the side frame 15.

As shown in the upper part (A) of the drawing, in the fuel cell vehicle 500 of the present embodiment, the cathode gas supply path 31 is arranged in between the side frame 15 and the attachment plate 331 of the protector 300. As a result, when a strong force toward the Y direction acts on the air compressor 30 fastened with the protector 300 due to side collision, the attachment plate 331 collides with the cathode gas supply path 31 and causes deformation of the cathode gas supply path 31 (see the middle part (B)). Accordingly, at least part of the impact due to the side collision is absorbed by the deformation of the cathode gas supply path 31. After the cathode gas supply path 31 is deformed, the attachment plate 331 of the protector 300 applies a force with respect to the side frame 15. However, large part of the impact of the side collision is used for deformation of the cathode gas supply path 31 and residual force causes deformation of the side frame 15 and deformation of the protector 300. As a result, a damage of the air compressor 30 is sufficiently suppressed.

Moreover, an impact generated by the air compressor 30 moving to the side frame 15 side due to side collision or the like is to be received by the protector 300 through deformation of the cathode gas supply path 31, and the air compressor 30 itself is hard to receive an impact. Similarly, the inverter case 82 provided in the vicinity of the air compressor 30 is hard to receive an impact and a damage such as crushing may be sufficiently suppressed. The inverter 81 handling a high voltage is provided inside the inverter case 82. Since the inverter case 82 is protected, maintainability of each component constituting the high voltage circuit and the circuit configuration itself is sufficiently secured.

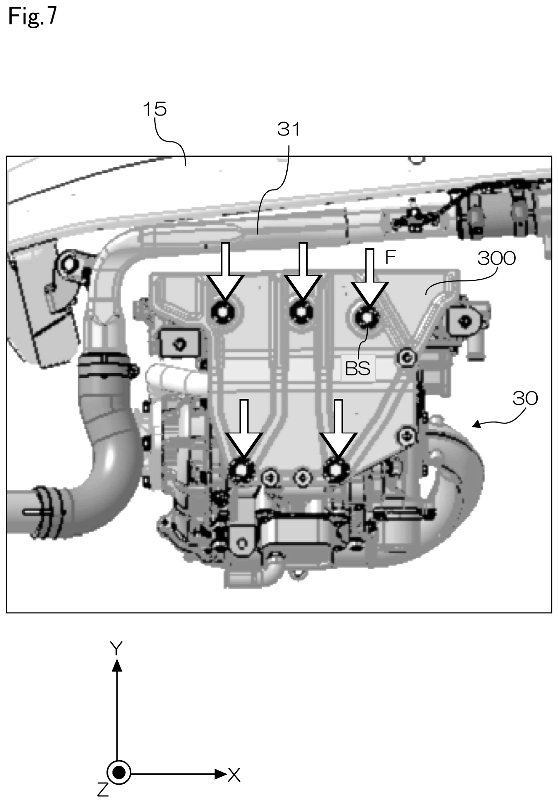

The fact that an input of an impact at the time of side collision or the like to the air compressor 30 or the inverter case 82 is relaxed may be confirmed by measuring a shearing stress of the boss BS connecting the air compressor 30 and the protector 300. FIG. 7 is an enlarged plan view showing a portion having the air compressor 30 in FIG. 3 as a center. With reference to the drawing, an influence on the boss BS when an impact is applied to the side frame 15 will be described. As shown in the drawing, in the present embodiment, the protector 300 is fastened to the air compressor 30 by five bosses BS. As exemplified in the lower part (C) of FIG. 5, in a structure in which the side frame 15 and the protector 300 directly contact with each other, an impact due to side collision or the like is applied to the protector 300, and a strength of the impact, as an example, was about 33 kN. The force was dispersed into five bosses BS, and when a shearing stress applied to each boss BS was measured, a shearing stress F of about slightly greater than 6 kN was applied to each boss BS. A proof stress (rating) of each boss BS used in the embodiment with respect to the shearing stress was about 3.8 kN. Therefore, a breakage sign was seen in some of the bosses BS. On the other hand, as exemplified in the upper part (A) of FIG. 5, when the cathode gas supply path 31 is arranged in between the side frame 15 and the protector 300, a force input to the protector 30 was reduced to about 18 kN with respect to an impact of the same extent, and the shearing stress F input to each boss BS was about 3.6 kN. This is below 3.8 kN that is the proof stress of each boss BS with respect to a breakage stress.

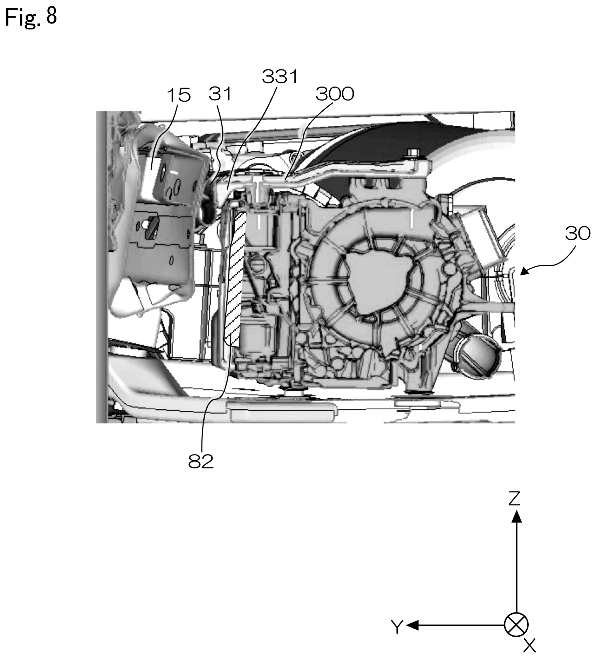

Therefore, a problem that the air compressor 30 or the inverter case 82 are departed from the protector 300 and largely deform due to side collision was suppressed or not generated. In addition, since the inverter case 82 is arranged further inside than the attachment plate 331, even when the side collision test is performed, as shown in FIG. 8, the inverter 82 was not damaged and the protection state of the inverter 81 was maintained. Therefore, even when the inverter case 82 needs to be provided in the vicinity of the side frame 15, the inverter case 82 and a high voltage component such as the inverter 81 accommodated inside may be protected. Accordingly, a degree of freedom of arrangement of the air compressor 30 and the inverter case 82 in the front room 510 may be improved.

Since the cathode gas supply path 31 sandwiched between the side frame 15 and the attachment plate 331 of the protector 300 is a piping that supplies air as oxygen-containing gas, even when the cathode gas supply path 31 absorbs an impact of side collision and is crushed, the gas in the piping is not burned and maintainability is sufficiently maintained. Since the cathode gas supply path 31 is a member for supplying air from the air compressor 30 to the fuel cell 101, the cathode gas supply path 31 is a member originally existing in the vicinity of the air compressor 30. Therefore, unnecessary work of extending a piping for absorbing an impact is hard to occur.

### B. Other Mode

(1) In the embodiment described above, the protector 300 is fastened in the upper part of the air compressor 30. However, the position of fastening the protector 300 and the air compressor 30 may be a position other than the upper part of the air compressor 30, for example, a side part or a lower part. The protector 300 may not be a separate member from the air compressor 30 and may be formed integrally with a frame of the air compressor 30 itself. The way of fastening of the protector 300 and the air compressor 30 is not limited to the boss BS and the fastening may be performed by nut and bolt, welding, or the like. Alternatively, the fastening may be performed by using an adhesive or press fitting. The number of bosses or nuts and bolts may be as desired as long as a sufficient fastening force is achieved.
(2) In the embodiment described above, the cathode gas supply path 31 being the gas supply piping arranged in between the side frame 15 and the protector 300 is made of a synthetic resin. However, the cathode gas supply path 31 may be made of the other member such as rubber, aluminum, a soft alloy, or the like as long as it is a material deformable at the time of collision. The gas supply piping may have a structure in which a buffer material or the like is arranged in the outer periphery thereof.

The present disclosure is not limited to the above-described embodiment and may be implemented with various configurations within a scope of not departing from the gist of the present disclosure. For example, the technical feature of the embodiment corresponding to the technical feature in each aspect described in SUMMARY may be appropriately replaced or combined in order to solve a part or all of the above-described problems or in order to achieve a part or all of the above-described effects. Unless the technical feature is described as essential in this specification, the feature may be appropriately deleted. For example, a part of the configuration implemented by hardware in the embodiment described above, may be implemented by software.

## Claims

1. A fuel cell vehicle (500) comprising:
a fuel cell (101) accommodated in a front room (510) of the vehicle (500);
an air compressor (30) that supplies oxygen-containing gas to the fuel cell (101) via a gas supply piping (31);
a side frame (15) provided further in an outside in a vehicle width direction of the vehicle (500) than the air compressor (30); and
a protector (300) fastened to the air compressor (30), the protector (300) having an end portion in the vehicle width direction arranged at a position facing the side frame (15),
wherein a part of the gas supply piping (31) is arranged in between the side frame (15) and the end portion of the protector (300).

2. The fuel cell vehicle (500) according to claim 1, wherein the protector (300) includes, in the end portion, an attachment plate (331) having a dimension larger than a thickness of the protector (300) in a direction of the thickness.

3. The fuel cell vehicle (500) according to claim 2, further comprising
an inverter (81) that supplies electric power to the air compressor (30),
wherein at least a part of an inverter case (82) storing the inverter (81) is arranged in a side of the side frame (15) of the air compressor (30) and further in an inside than the attachment plate (331).

4. The fuel cell vehicle (500) according to claim 1, wherein fastening of the protector (300) and the air compressor (30) is performed by a plurality of bosses (BS).

5. The fuel cell vehicle (500) according to anyone of claims 1 to 4, wherein a portion of the gas supply piping (31) arranged in between the side frame (15) and the end portion of the protector (300) is a piping made of a resin.
